Europäisches Patentamt

European Patent Office

Office européen des brevets

(11) Veröffentlichungsnummer : **0 182 180**
**B1**

# (12) EUROPÄISCHE PATENTSCHRIFT

(45) Veröffentlichungstag der Patentschrift :
28.09.88

(21) Anmeldenummer : 85113993.1

(22) Anmeldetag : 04.11.85

(51) Int. Cl.⁴ : **B 25 J 15/04, B 25 J 17/02**

(54) Greifer für Industrieroboter.

(30) Priorität : 12.11.84 DE 3441279

(43) Veröffentlichungstag der Anmeldung :
28.05.86 Patentblatt 86/22

(45) Bekanntmachung des Hinweises auf die Patenterteilung : 28.09.88 Patentblatt 88/39

(84) Benannte Vertragsstaaten :
AT CH DE FR GB IT LI SE

(56) Entgegenhaltungen :
EP-A- 0 120 275
EP-A- 0 120 391
EP-A- 0 138 038
DE-A- 3 239 797
DE-A- 3 306 526
GB-A- 2 130 550
US-A- 3 893 217
US-A- 3 963 271
MESURES, REGULATION, AUTOMATISME, Band 47,
Nr. 3, März 1982, Seiten 29-35, Paris, FR; "Pinces
pour robots: l'intelligence dans le poignet"

(73) Patentinhaber : Siemens Aktiengesellschaft Berlin
und München
Wittelsbacherplatz 2
D-8000 München 2 (DE)

(72) Erfinder : Hartmann, Gunter
Hohenwaldeckstrasse 2
D-8000 München 90 (DE)
Erfinder : Kästner, Wolfgang
Daiserstrasse 33
D-8000 München 70 (DE)
Erfinder : Kobras, Franz
Reichenaustrasse 7
D-8000 München 60 (DE)
Erfinder : Swoboda, Ralf
Neufriedenheimerstrasse 4
D-8000 München 70 (DE)

## Beschreibung

Die Erfindung betrifft Greifer für Industrieroboter mit Sicherheitskupplung zum Ablegen oder Aufnehmen eines zum Beispiel zylinderförmigen Teils in oder aus einer der Raumform dieses Teils entsprechend gestalteten Kammer einer Horde, wobei der Greifer fluchtend zur Mittelachse der jeweiligen Kammer zu positionieren ist. Zu dem Begriff Roboter sollen alle programmierbaren Handhabungsgeräte gehören.

Zum Ablegen oder Aufnehmen eines zylinderförmigen Teils, zum Beispiel Läufer eines Elektromotors, mit einem Industrieroboter in zylindrische Kammern einer Horde ist es erforderlich, den Industrieroboter-Greifer fluchtend zur Mittelachse der Kammer zu positionieren. Da die Kammermittelachsen durch Toleranzen im Bezug zur Hordenaußenkante und zueinander vom idealen Hordenraster abweichen, muß für das Ablegen die Abweichung gemessen und in der Industrieroboter-Steuerung zur Positionskorrektur verwendet werden.

In der Ist-Fertigung wurden die Läufer bisher manuell von einer Maschine oder einem Förderband entnommen und in der Horde abgelegt bzw. manuell aus der Horde entnommen und in die Maschine eingelegt.

Der Erfindung liegt die Aufgabe zugrunde, den eingangs definierten Greifer zu konzipieren. Eine weitere Forderung ist, daß das zu handhabende Teil (Läufer) bei Energieausfall im Greifer gespannt bleibt. Um Beschädigungen vom Greifer, Industrieroboter und Peripherie zu vermeiden, ist ferner eine Sicherheitskupplung vorzusehen, die den Industrieroboter im Kollisionsfalle abschaltet.

Die der Erfindung zugrundeliegende Aufgabe wird dadurch gelöst, daß die Greifereinheit zum Erkennen der jeweils momentanen Position, zum Beispiel einer zu beschickenden Kammer, während eines Abtastzyklus mit einer Verschiebeeinheit zur Verschiebung entlang dreier unabhängiger Achsen x, y, z ausgestattet ist sowie mit einem Weggeber für x, y und z, der die jeweiligen Positionsmaße aufnimmt, und mit einer Zentrier- bzw. Arretiermechanik den Greifer für sonstige Arbeitsgänge definiert.

Weitere Einzelheiten der Erfindung sind Gegenstand der Unteransprüche.

In der Praxis hat man zwar gleichartige Horden aber mit verschiedenen Toleranzen der einzelnen Kammern zum Hordensollraster. Nach der Erfindung ist es für das Aufnehmen eines Läufers möglich, daß sich der Greifer beim Aufsetzen auf den Läufer zentriert und über eine schwimmende Aufnahme ausrichtet.

Durch die Erfindung wird erreicht, daß der Roboter in der Lage ist, jeweils die momentane Position der zu beschickenden Kammer über einen Abtastzyklus zu erkennen. Dabei schwimmt sich der Greifer über die x-y-z-Verschiebeeinheit auf die Ist-Position der Kammer ein, wobei die x, y, z-Verschiebeeinheit je nach der konstruktiven Ausführung Verschiebewege bis zu einigen cm zuläßt. Der Mittelpunktversatz zum Raster der Soll-Position des Industrieroboters wird mittels der Weggeber gemessen und vom Industrieroboter abgespeichert, um für das Ablegen als neue Soll-Position zu dienen. Das bedeutet, daß sämtliche Toleranzen zwischen Soll- und Ist-Hordenraster ausgeschaltet werden können.

Die Erfindung wird anhand der Figuren erläutert. Es zeigen:

Figur 1 einen Ausschnitt einer Horde mit zylindrischen Kammern, davon eine im Schnitt,

Figur 2 eine Kammer im Schnitt mit darüber angeordneter Greiferspitze,

Figur 3 einen Läufer beim lagerichtigen Absenken mittels eines Greifers in eine Kammer,

Figur 4 Aufnehmen eines Läufers aus einer Kammer mit einem Greifer,

Figur 5 den Greifer teilweise im Schnitt und

Figur 6 das Maul (Spannzone) der Greifereinheit.

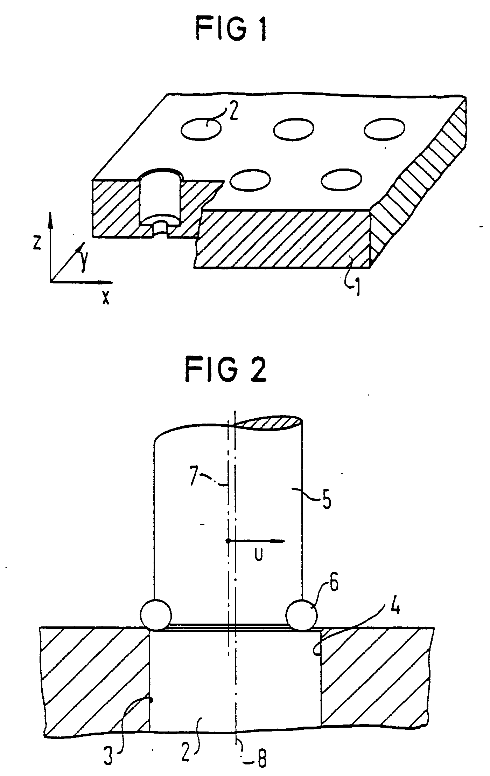

In der Figur 1 ist ein Ausschnitt einer Horde 1 mit sechs zylinder förmigen Kammern 2 dargestellt. Mit den Pfeilen x, y, z sind die Bewegungsrichtungen angedeutet, die ein Greifer beim Ablegen oder Aufnehmen eines zylinderförmigen Teiles, zum Beispiel eines Läufers eines Elektromotors, ausführen muß.

In der Figur 2 ist vergrößert ein Teil einer Kammer 2 gezeichnet, die durch die Wände 3, 4 begrenzt ist. An der Greiferspitze 5 sind Rollen 6 angebracht. Mit dem Pfeil U ist die Verschiebung der Greiferachse 7 (gespeicherter Wert in der Robotersteuerung) zur Kammermittellinie 8 markiert.

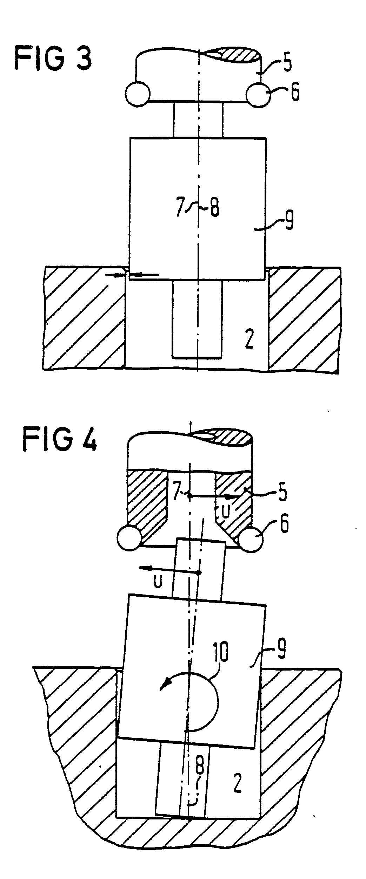

Nach der Darstellung in der Figur 3 wird gerade ein Läufer 9 in eine Kammer 2 abgesenkt. Bei diesem Verfahrensabschnitt ist bereits die ehemalige Greiferachse 7 auf den Wert der Kammerachse 8 korrigiert.

Nach der Figur 4 steht ein Läufer 9, der durch den Greifer 5 entnommen werden soll, schräg in seiner Kammer 2. 7 und 8 müssen nicht in einer Linie liegen, sondern können auch nur zueinander entsprechend Figur 2 fluchtend sein. Mit 10 ist schematisch angedeutet, wie der Läufer beim Aufnehmen vom Greifer senkrecht gestellt wird.

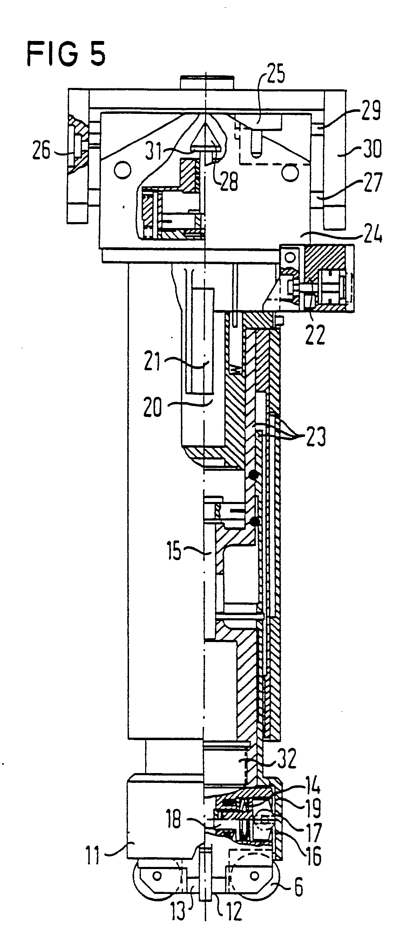

Nach der Darstellung in der Figur 5 sind an der Spannvorrichtung 11 die Rollen 6 und der Fangkonus 12 angebracht. Das Maul (die Spannzone) ist mit 13 bezeichnet. Die Spannvorrichtung 11 arbeitet durch zwischengeschaltete Tellerfedern 14 kraftschlüssig. Eine druckluftbetätigte 15 konische Hülse 16 überträgt über eine Rolle 17 die Spannkraft auf einen Spannbacken 18. In der Endlage des gespannten Zustandes liegt die Rolle auf dem zylindrischen Teil 19 der Hülse, so daß bei Druckluftausfall das Zurückschieben der Hülse durch die Rückstellkraft des Spannbackens 18 ausgeschlossen wird. Das Maul 13 der Spannvorrichtung ist so ausgeführt, daß sowohl die Lage des Hordenloches durch die vier senkrecht zueinander angebrachten Rollen 6 als auch die Position der Welle durch einen Fangkonus 12 zentrisch angefahren werden können.

Die Komponenten 24 der x, y, z-Verschiebeeinheit ermöglichen durch zwei Weggeber 25, 26, zum Beispiel Potentiometer, die exakte Lagebestimmung des Werkstücks bzw. des Hordenrasters. Die Verschiebeeinheit wird durch je zwei Stahlachsen 27 pro Richtung mit Kugelbuchsen geführt. Nach dem Meßvorgang muß die Verschiebeeinheit zentriert werden, um Spielfreiheit für die folgenden Arbeiten zu gewährleisten. Dazu ist ein druckluftbetätigtes Element 28, zum Beispiel ein Kegel, vorgesehen, der vier jeweils senkrecht zueinander stehende Bolzen 29 gegen einen Halter 30 der Verschiebeeinheit drückt. Für den Fall des Druckluftausfalls ist an dem Kegel ein zylindrischer Bund 31 vorgesehen, so daß auch dann die Spielfreiheit des Greifers gewährleistet bleibt.

Die Komponente 20 der x, y, z-Verschiebeeinheit dient der Abfrage, ob der Meßvorgang in x- und y-Richtung beendet ist und ferner zur exakten Messung der Kammer- bzw. Wellenhöhe. Über den Weggeber 21 wird die Eintauchtiefe der Industrieroboter-Steuerung mitgeteilt. Dadurch übernimmt diese Einheit auch eine Sicherheitsfunktion, indem sie im Falle des unbeabsichtigten Aufsetzens des Greifers ein Signal an die Industrieroboter-Steuerung abgibt, das den Arm anhält und so den Greifer, das Werkstück und die Peripherie vor Beschädigung schützt. Um jedoch bei hohen Fahrgeschwindigkeiten des Roboterarms Signale, die aufgrund der Trägheit des Greifers und des Werkstücks entstehen, auszuschalten, ist eine Arretiermöglichkeit 22 für die Achsen 23 vorgesehen.

Um fehlende Werkstücke auf größere Entfernung zu erkennen bzw. Abstände zu messen, ist in der Spannvorrichtung 11 oberhalb der Spannbacken 18 ein Ultraschall-Sensor 32 eingebaut. Er arbeitet durch einen Kanal 33, der gleichzeitig zur Aufnahme der Läuferachsen dient, so daß die Richtwirkung der Schallkeule verbessert wird.

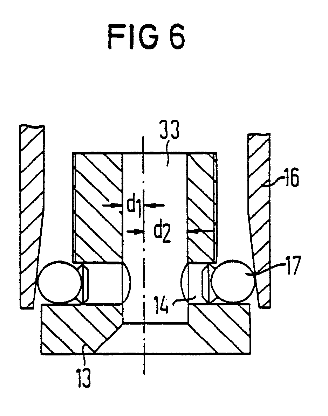

Aus der Figur 6 ist ferner zu erkennen, daß Wellen verschiedener Durchmesser, zum Beispiel d1 bis d2, lediglich durch Austauschen des Mauls 13 zum Ablegen oder Aufnehmen gegriffen werden können. Hierzu ist das Maul der Greifereinheit nur angeschraubt, so daß für die geänderten Wellen- oder Hordenlochdurchmesser innerhalb der gewissen Grenzen nur ein anderes Maul eingeschraubt werden muß. Für Änderungen größeren Umfangs muß außerdem die konische Betätigungshülse ausgetauscht werden. Es lassen sich also werkstück-serien mit einer relativ großen Bandbreite bezüglich Durchmesser handhaben.

Der Greifer ist am Industrieroboterarm mit einer Sicherheitskupplung befestigt.

Funktionsablauf beim Ablegen eines Läufers :

- Der Industrieroboter positioniert den Greifer entsprechend der Raster-Soll-Position in einem bestimmten Abstand über der zu beschickenden Kammer.

- Der Industrieroboter senkt den Greifer senkrecht ab ; sobald die Greiferspitze (Rollen 6) eine Kammerwand berührt (Figur 2), erfolgt eine Verschiebung des Greifers in x- und y-Richtung relativ zum Industrieroboter-Flansch bis der Greifer bei vorgegebener Eintauchtiefe, die über die z-Komponente überwacht wird, zentrisch zum Kammermantel ausgerichtet ist.

- Dieser Mittelpunktversatz zur Raster-Soll-Position wird mittels der Weggeber 25 und 26 gemessen und von der Industrieroboter-Steuerung registriert.

- Der Industrieroboter fährt den Greifer aus. Die x-/y-Verschiebeeinheit wird zentriert und die z-Komponente arretiert. Nun holt der Industrieroboter von der Entnahmeposition, zum Beispiel Maschine, den abzulegenden Läufer.

- Während des Zurückfahrens zur Ablageposition wird von der Industrieroboter-Steuerung entsprechend den gemessenen $\Delta x$ und $\Delta y$ eine Positionskorrektur durchgeführt und der Läufer lagerichtig in der Randzone der Kammer positioniert (Figur 3).

- Nach Freischalten der x-/y-z-Verschiebeeinheit wird der Läufer eingesetzt (Ausgleich der Resttoleranzen durch Einschwimmen) und in der Endlage freigegeben.

Mittels der federnden Aufhängung (z-Verschiebeeinheit) wird der Fügevorgang sowohl im Meßzyklus als auch im Ablagezyklus überwacht. Im Störungsfalle, zum Beispiel Aufsetzen des Greifers, federt die Greifeinheit ein. Wenn der vom Weggeber 21 abgegebene Wert einen programmierten Grenzwert erreicht, stoppt der Industrieroboter und geht in ein Fehlerprogramm.

Beim Aufnehmen eines Läufers fährt der Industrieroboter mit freigeschalteter x-/y-z-Verschiebeeinheit auf die Läuferwelle. Über den Innenkonus des Greifers wird die Läuferwelle erfaßt und beim weiteren Absenken schwimmt sich der Greifer ein. In der Endlage wird der Greifer geschlossen (Einfahren siehe Figur 4). Nach dem Ausheben des Läufers wird die x-/y-Verschiebeeinheit zentriert und die z-Komponente arretiert. Der Läufer steht jetzt in definierter Lage zum Industrieroboter und kann programmgemäß zur Ablageposition transportiert und dort definiert abgelegt werden.

Soll in die Entnahmeposition ein anderer Läufer eingelegt werden, so wird nach dem Einschwimmen und Greifen der Versatz gemessen. Dann wird wie oben beschrieben der Läufer entnommen und abgelegt. Danach wird ein anderer Läufer übernommen, die Positionskorrektur ausgeführt und dieser Läufer in die Entnahmeposition abgelegt.

**Patentansprüche**

1. Greifer für Industrieroboter mit Sicherheitskupplung zum Ablegen oder Aufnehmen eines zum Beispiel zylinderförmigen Teils in oder aus einer der Raumform dieses Teils entsprechend gestalteten Kammer einer Horde, wobei der Greifer fluchtend zur Mittelachse der jeweiligen Kammer zu positionieren ist, dadurch gekennzeichnet, daß die Greifereinheit zum Erkennen der jeweils momentanen Position, zum Beispiel einer zu beschickenden Kammer, während eines Absatzzyklus mit einer Verschiebeeinheit zur Verschiebung entlang dreier unabhängiger Achsen x, y, z ausgestattet ist sowie mit einem Weggeber für x, y und z, der die jeweiligen Positionsmaße aufnimmt, und mit einer Zentrier- bzw. Arretiermechanik den Greifer für sonstige Arbeitsgänge definiert.

2. Greifer nach Anspruch 1, dadurch gekennzeichnet, daß an der vom Industrieroboter abgewendeten Seite des Greifers eine Spannvorrichtung (11) vorgesehen ist, die über zwischengeschaltete Tellerfedern (14) kraftschlüssig arbeitet und daß eine druckluftbetätigte (15), konische Hülse (16) über eine Rolle (17) die Spannkraft auf einen Spannbacken (18) überträgt.

3. Greifer nach Anspruch 2, dadurch gekennzeichnet, daß die Rolle (17) in der Endlage des gespannten Zustandes auf dem zylindrischen Teil (19) der Hülse aufliegt, so daß der Greifer bei Energieausfall selbsthaltend ist.

4. Greifer nach Anspruch 2, dadurch gekennzeichnet, daß das Maul (13) der Spannvorrichtung (durch einfache Verschraubung) austauschbar und zum Beispiel durch vier senkrecht zueinander angebrachte Rollen (6) selbstzentrierend zur Kammer ist und/oder daß sich die Greifereinheit über den Fangkonus (12) zur Position der Welle (8) einstellt.

5. Greifer nach Anspruch 1, dadurch gekennzeichnet, daß eine Arretiermöglichkeit für die Achsen vorgesehen ist, die ein Schwimmen des Greifers bei hohen Fahrgeschwindigkeiten verhindert.

6. Greifer nach Anspruch 1, dadurch gekennzeichnet, daß drei Weggeber (21, 25, 26) die Erfassung der Momentan-Position der x-y-z-Verschiebeeinheit im bezug zu ihrem Referenzpunkt, dem Roboterflansch, ermöglichen.

7. Greifer nach Anspruch 6, dadurch gekennzeichnet, daß zum Zentrieren der Verschiebeeinheit nach dem Meßvorgang ein druckluftbetätigtes Element (28) vorgesehen ist, das vier jeweils senkrecht zueinander stehende Bolzen (29) gegen den Halter (30) der Verschiebeeinheit drückt.

8. Greifer nach Anspruch 7, dadurch gekennzeichnet, daß an dem Element (28) ein zylindrischer Bund (31) vorgesehen ist, der bei Druckluftausfall die Zentrierung aufrecht erhält.

9. Greifer nach Anspruch 2, dadurch gekennzeichnet, daß in der Spannvorrichtung (11) oberhalb der Spannbacken (18) ein Ultraschallsensor (32) hinter einem Kanal (33), der die Schallkeule begrenzt, eingebaut ist und somit die Richtwirkung verbessert.

**Claims**

1. A gripper for industrial robots with a safety coupling for the setting down or picking up of a for example cylindrical part into or out of a chamber of a hurdle, the chamber being shaped correspondingly to the three-dimensional shape of this part and the gripper having to be positioned in alignment with the centre axis of the respective chamber, characterised in that, for detection of the position at any one moment, for example of a chamber to be charged, during a scanning cycle, the gripper unit is equipped with a displacement unit for displacement along three independant axes x, y, z as well as with a displacement sensor for x, y, z which records the respective positional dimensions, and with a centring or arresting mechanism defines the gripper for other operations.

2. A gripper according to Claim 1, characterised in that a clamping device (11) is provided on the side of the gripper remote from the industrial robot, which clamping device operates nonpositively by means of interposed disc springs (14), and in that a pneumatically operated (15), conical sleeve (16) transfers the clamping force via a roller (17) to a clamping jaw (18).

3. A gripper according to Claim 2, characterised in that, in the end position of the clamped state, the roller (17) rests on the cylindrical part (19) of the sleeve, so that the gripper is self-holding in the event of an energy failure.

4. A gripper according to Claim 2, characterised in that the mouth (13) of the clamping device is exchangeable (by simple screwing) and is self-centring with respect to the chamber, for example by four mutually perpendicular rollers (6), and/or in that the gripper unit adjusts itself to the position of the shaft (8) by means of the catch cone (12).

5. A gripper according to Claim 1, characterized in that an arresting possibility is provided for the axes, which prevents a floating of the gripper at high travelling speeds.

6. A gripper according to Claim 1, characterised in that three displacement sensors (21, 25, 26) make possible the registration of the momentry position of the x-y-z displacement unit with respect to its reference point, the robot flange.

7. A gripper according to Claim 6, characterised in that a pneumatically operated element (28) is provided for the centring of the displacement unit after the measuring operation, which element presses four mutually perpendicular bolts (29) against the holder (30) of the displacement unit.

8. A gripper according to Claim 7, characterised in that a cylindrical collar (31) is provided on the element (28), which collar maintains the centring in the event of a loss of the compressed air supply.

9. A gripper according to Claim 2, characterised in that an ultrasonic sensor (32) is fitted in the clamping device (11) above the clamping jaws (18) behind a channel (33) which limits the sound cone, and thus improves the directionality.

**Revendications**

1. Organe de préhension pour robots industriels comportant un accouplement de sécurité servant à déposer ou à saisir une pièce par exemple de forme cylindrique, dans ou hors d'une chambre, possédant une configuration correspondant à la forme spatiale de cette pièce, d'un plateau de rangement, la pince devant être positionnée de manière à être alignée avec l'axe central de la chambre respective, caractérisé par le fait que pour l'identification de la position instantanée respective par exemple d'une chambre devant être approvisionnée, pendant un cycle de dépôt, l'unité formant organe de préhension est pourvue d'une unité d'entraînement destinée à se déplacer le long de trois axes indépendants (x, y, z), ainsi que d'un capteur de distance pour x, y et z, qui enregistre la cote respective de position, et positionne, avec un mécanisme de centrage et de blocage, l'organe de préhension pour d'autres phases opératoires.

2. Organe de préhension suivant la revendication 1, caractérisé par le fait que sur le côté de l'organe de préhension, tourné à l'opposé du robot industriel, il est prévu un dispositif de serrage (11) qui opère selon une transmission de force par l'intermédiaire de rondelles-ressorts (14) intercalées et qu'un manchon conique (16), actionné par air comprimé (15), transmet la force de serrage à une mâchoire de serrage (18), par l'intermédiaire d'un galet (17).

3. Organe de préhension suivant la revendication 2, caractérisé par le fait que, dans la position finale correspondant à l'état serré, le galet (17) s'applique sur la partie cylindrique (19) du manchon de sorte que dans le cas d'une défaillance de l'énergie, l'organe de préhension réalise un maintien automatique.

4. Organe de préhension suivant la revendication 2, caractérisé par le fait que l'embouchure (13) du dispositif de serrage peut être remplacée (grâce à un simple vissage) et réalise un auto-centrage par rapport à la chambre, par exemple à l'aide de quatre galets (6) perpendiculaires entre eux, et/ou que l'unité formant organe de préhension se règle au moyen du cône récepteur (12) sur la position de l'arbre (8).

5. Organe de préhension suivant la revendication 1, caractérisé par le fait qu'il est prévu, pour les axes, une possibilité de blocage empêchant un flottement de l'organe de préhension dans le cas de grandes vitesses de déplacement.

6. Organe de préhension suivant la revendication 1, caractérisé par le fait que trois capteurs de distance (21, 25, 26) permettent de détecter la position instantanée de l'unité d'entraînement suivant x-y-z, par rapport à son point de référence, à savoir la bride du robot.

7. Organe de préhension suivant la revendication 6, caractérisé par le fait que pour le centrage de l'unité d'entraînement après l'opération de mesure, il est prévu un élément (28), qui est commandé par de l'air comprimé et repousse quatre tiges (29), perpendiculaires entre elles, contre le support (30) de l'unité d'entraînement.

8. Organe de préhension suivant la revendication 7, caractérisé par le fait que sur l'élément (28) il est prévu un collet cylindrique (31) qui maintient le centrage dans le cas d'une défaillance de l'air comprimé.

9. Organe de préhension suivant la revendication 2, caractérisé par le fait qu'un détecteur à ultrasons (32) est monté dans le dispositif de serrage (11) au-dessus des mâchoires de serrage (18), derrière un canal (33) qui limite le lobe de rayonnement, et améliore par conséquent l'effet directif.

# FIG 1

# FIG 2

FIG 3

FIG 4

FIG 5

0 182 180

# FIG 6